# EUROPEAN PATENT APPLICATION

(11) **EP 4 848 390 A1**
(43) Date of publication of application: **02.12.2026**
(21) Application number: 25892225.1
(22) Date of filing: 09.06.2025
(51) Int. Cl.: H01M 10/04, B65H 23/038, B65H 19/18

(54) **METHOD FOR CONTROLLING DELTA VALUE FEEDBACK OF AUTOSPLICING DEVICE FOR CORRECTING DEFECTIVE STATE OF SEMI-FINISHED ELECTRODE PRODUCT**

(30) Priority: 18.11.2024 KR 20240164608
(71) Applicant: LG Energy Solution, Ltd., Seoul 07335 (KR)
(72) Inventor: KWAK, Jun Hyun, Daejeon 34122 (KR); KIM, Bo Sun, Daejeon 34122 (KR)
(74) Representative: Goddar, Heinz J.
(86) International application number: PCT/KR2025/007806
(87) International publication number: WO 2026/105999

(57) **Abstract**

An auto-splicing device delta value feedback control method for correcting an electrode semi-finished product defect state is provided. The method includes in an auto-splicing device that connects a traveling electrode and a standby electrode, measuring a width direction position of the traveling electrode before an exhaustion of the traveling electrode; measuring a width direction position of the traveling electrode after the exhaustion of the traveling electrode; determining whether a correction is necessary based on a difference in the width direction position of the traveling electrode before exhaustion and the width direction position of the traveling electrode after the exhaustion; and performing the correction by moving the traveling electrode in a width direction based on determining to perform the correction.

## Description

### Technical Field

The present disclosure relates to an electrode alignment method, and more specifically, relates to an auto-splicing device delta value feedback control method for electrode semi-product defect state correction.

### Background

Recent trends in secondary battery equipment move toward minimizing worker intervention. Accordingly, electrode material replacement is performed automatically even in the lamination process. Upon material replacement, a process of connecting a previously working electrode (traveling electrode, using electrode) to an electrode to be newly worked (standby electrode, new electrode) is required, where the connection state of both electrodes significantly affects an operating rate and a yield upon facility operation after completion of the material replacement. Accordingly, the best method is to straight connect the connection portions of both electrodes without any step.

Upon replacement of electrode materials, a method of moving the prepared electrode and the traveling electrode, respectively, forward from their positions to each other's direction, and attaching them is performed. There is a portion where polyethylene terephthalate (PET) and the electrode are connected toward a core portion of an electrode bobbin, where when a connection state between the PET and the electrode is not straight, the electrode is bent diagonally and travels at the end. In this case, the attachment state is not connected straight upon material replacement, thereby affecting the yield and processability upon the equipment restart.

There is no problem if the connection state between the PET and the electrode toward the core portion of the electrode bobbin, i.e., the semi-finished product state is made to be in a good condition in the previous process and put into the lamination process, but in reality, since it is affected by influences of previous process events, setup errors, electrode swell, and the like, it is difficult to maintain a uniform semi-finished product state across all electrode rolls. Even if the semi-finished product state is defective in the lamination process, which is a subsequent process, a method for minimizing defects is needed. Accordingly, in a lamination supply part facility, there is a need for a function of measuring and correcting a level twisted from the travel direction of the electrode at the time point of the travel completion.

### Disclosure

### Technical Problem

Therefore, it is an object of the present disclosure to provide an electrode alignment method in an auto-splicing device.

### Technical Solution

To achieve the above-described object, the present disclosure provides an electrode alignment method including; in an auto-splicing device that connects a traveling electrode and a standby electrode, measuring a width direction position of the traveling electrode before an exhaustion of the traveling electrode; measuring a width direction position of the traveling electrode after the exhaustion of the traveling electrode; determining whether a correction is necessary based on a difference in the width direction position of the traveling electrode before exhaustion and the width direction position of the traveling electrode after the exhaustion; and, based on determining to perform the correction, performing the correction by moving the traveling electrode in a width direction.

In the present disclosure, the performing a correction by moving the traveling electrode in the width direction may be performed by: a width direction movement of a shuttle including a splicing table on which an electrode connection is performed, a first roller for transferring the traveling electrode, and a sensor for measuring the width direction position of the traveling electrode.

In the present disclosure, a width direction position of the traveling electrode in the first roller may be aligned by the width direction movement of the shuttle to be identical to a width direction position of the traveling electrode in a second roller, which is disposed above the shuttle in a height direction.

In the present disclosure, the width direction movement of the shuttle may be driven by a servomotor.

In the present disclosure, the shuttle, including the splicing table, the first roller, and the sensor, and the traveling electrode may be move in the width direction.

In the present disclosure, the sensor may include a first sensor positioned downward and a second sensor positioned upward in a height direction with respect to the splicing table.

In the present disclosure, the first sensor may be a spool edge position controller (EPC) sensor, and the second sensor may be a traveling electrode edge sensor.

In the present disclosure, based on a difference between a width direction position of the traveling electrode measured by the first sensor and a width direction position of the traveling electrode measured by the second sensor exceeding a preset reference value, determining a meandering of the traveling electrode, and to perform the correction.

In the present disclosure, the meandering of the traveling electrode may occur when the traveling electrode is exhausted.

In the present disclosure, in an electrode semi-finished product including a bobbin on which the traveling electrode is wound, a connecting fabric connecting the bobbin and the traveling electrode, and the traveling electrode, the meandering of the traveling electrode may be due to connection state defects between the connecting fabric and the traveling electrode.

In the present disclosure, before measuring the width direction position of the traveling electrode before the exhaustion of the traveling electrode, the first roller may advance to align the traveling electrode between the first roller and the second roller to be vertical in the height direction.

In the present disclosure, the correction of the traveling electrode may be performed before a connection of the traveling electrode and the standby electrode.

Furthermore, the present disclosure provides an electrode alignment system including: a shuttle including a splicing table on which an electrode connection is performed, a first roller for transferring a traveling electrode supplied from a bobbin, and a sensor for measuring a width direction position of the traveling electrode; a second roller disposed above the shuttle in a height direction and adapted to transfer the traveling electrode passing through the first roller; and a control part configured to control a width direction position of the traveling electrode in the first roller and a width direction position of the traveling electrode in the second roller to be aligned equally by moving the shuttle in a width direction based on a difference in a width direction position of the traveling electrode before an exhaustion and a width direction position of the traveling electrode after the exhaustion. Any combination between all claims, any combination between all elements, any combination between all steps or processes, and any combination between all aspects are possible.

### Advantageous Effects

According to the present disclosure, by adding a delta value feedback control logic to an auto-splicing device for electrode semi-finished product defective state correction, it is possible to increase a yield and an operating rate of a lamination process.

### Description of Drawings

FIG. 1 is a schematic diagram illustrating a tilting state of an electrode.
FIG. 2 is a schematic diagram illustrating a step due to tilting of an electrode.
FIG. 3 is a schematic diagram illustrating a state before meandering of a traveling electrode occurs.
FIG. 4 is a schematic diagram illustrating a state after meandering of a traveling electrode occurs.
FIG. 5 is a schematic diagram illustrating a state where meandering of a traveling electrode has been corrected according to aspects of the present disclosure.
FIG. 6 is a flowchart of a correction control logic according to aspects of the present disclosure.

### Detailed Description

Hereinafter, the present disclosure will be described in detail with reference to the accompanying drawings.

Conventionally, auto-splicing devices lacked a function for measuring a level of twist (meandering) in a vertical direction (or perpendicular direction) from a travel direction (width direction) of an electrode at the time point of electrode traveling completion. That is, the conventional auto-splicing process consisted of A (electrode exhaustion) + B (electrode replacement).

The present disclosure is characterized by addition of a logic for measuring a level of twist (meandering) in a vertical direction from a travel direction of an electrode at the time point of electrode traveling completion. That is, the auto-splicing process of the present disclosure may include A (electrode exhaustion) + C (electrode tilting (meandering) level measurement and correction) + B (electrode replacement).

In the present disclosure, to feedback a delta value into an auto-splicing device at the time point of electrode traveling completion, several things may be defined as follows. First, it may be implemented in a facility to which an auto-splicing device connecting electrodes for electrode replacement is applied. Second, an electrode semi-finished product may include a structure including a bobbin, a fabric (e.g., PET) for connecting the bobbin and an electrode, and an electrode connected to the fabric, but may be in a state where the electrode is wound around the bobbin in a roll shape. Third, a drive motor for moving an electrode supply part (shuttle) may include a servo motor. Fourth, the electrode supply part may be provided with a spool EPC and a sensor for measuring an edge.

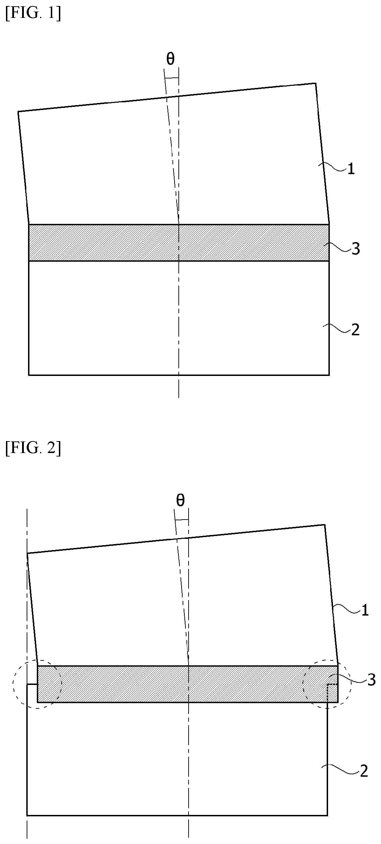

Referring to FIG. 1, a traveling electrode (1) after exhaustion is connected to a standby electrode (2) through a connecting tape (3), thereby being replaced with the standby electrode (2), where the traveling electrode (1) may cause tilting (meandering) twisted by an angle of theta (θ) based on the centerline (vertical dash-dotted line in the diagram) of the traveling path. A defect rate may increase depending on such a tilting state. In a lamination facility, a first separator, a negative electrode disposed on the first separator, a second separator disposed on the negative electrode, and a positive electrode disposed on the second separator are laminated in this order, where the laminated structure of such a unit cell is called a mono-cell. When manufacturing the mono-cell, the positions of the respective materials may be a factor in determining whether the product is good or bad.

As in FIG. 1, when the level of twist represented by a large theta (θ) value, the relative positions among the respective materials (positive electrode, separator, negative electrode) upon lamination of the respective materials deviate from in-house defined specifications, whereby defects may occur. For example, when the relationship between the theta (θ) level of the connection portion and the defect rate at mass production sites is confirmed, there is a tendency that greater theta (e.g., greater twist), the higher the defect rate.

Referring to FIG. 2, depending on the tilting state of the traveling electrode (1), the connecting tape (3) may be exposed, and steps (indicated by circles in the diagram) may occur on both sides in the width direction (Y-axis direction) between the standby electrode (2) and the connecting tape (3) at the connection region, where this exposure and steps may cause jamming.

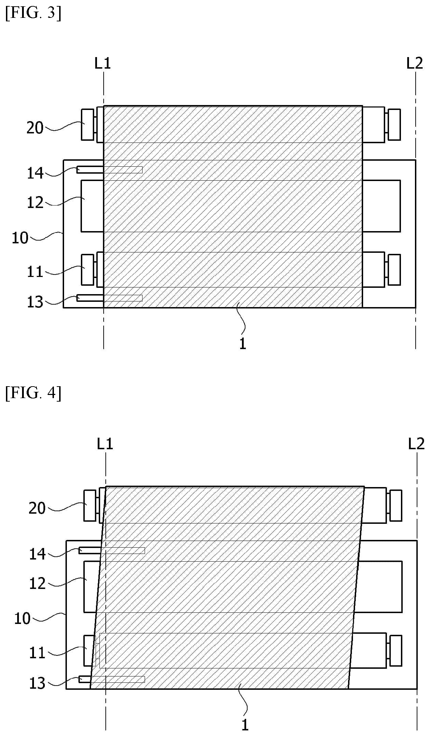

Referring to FIGS. 3 to 5, the present disclosure can mitigate a theta twisting phenomenon by measuring the path of the traveling electrode (1) before and after an auto-splicing facility stops, and moving a supply part shuttle (10) by a delta (difference) to compensate it. The theta twisting phenomenon may be understood as a level or degree of twist in the traveling electrode by an angle of theta with respect to the centerline, as described in FIGS. 1 and 2.

FIGS. 3 to 5 are schematic diagrams of an auto-splicing facility viewed from a height direction. The auto-splicing facility is an automatic connection device that automatically connects (e.g., attaches, bonds) the traveling electrode (1) during use and a new standby electrode (2) upon exhaustion of the traveling electrode (1). Typically, the traveling electrode (1) and the standby electrode (2) are connected to each other in a state erected (vertical) in the height direction (vertical direction), and therefore, FIGS. 1 to 5 are all viewed from the height direction (vertical direction).

Meanwhile, in FIGS. 3 to 5, only the facility on the traveling electrode (1) side of the auto-splicing facilities is illustrated, and the facility on the standby electrode (2) side is omitted. The facility on the standby electrode (2) side may also have substantially the same constitutions as those of the facility on the traveling electrode (1) side, but both facilities may be disposed symmetrically left and right to face each other at a predetermined interval.

The present disclosure relates to the correction of the traveling electrode (1) and is not associated with the correction of the standby electrode (2). Furthermore, since the traveling electrode (1) is corrected in advance prior to replacement, the standby electrode (2) does not need to be corrected.

In FIGS. 3 to 5, the traveling electrode (1) may travel upward from the bottom of the diagrams. In the schematic diagrams, the left-right direction may be the width direction (Y-axis direction), the up-down direction may be the travel direction (X-axis direction) and the height direction (vertical direction), and the forward direction of the first roller (11) may be the direction (Z-axis direction) toward an observer. Here, the width direction may be the width direction of the traveling electrode (1), and the travel direction may be the travel direction of the traveling electrode (1).

The auto-splicing facility according to the present disclosure may include a shuttle (10), a second roller (20), and a control part (not shown), and the like, where the shuttle (10) may be provided with a first roller (11), a splicing table (12), a first sensor (13), and a second sensor (14), and the like.

The shuttle (10) may correspond to a main body of the auto-splicing facility. The shuttle (10) may move in the width direction on its own for correction and alignment of the traveling electrode (1) by the width direction movement of the traveling electrode (1). The width direction movement of the shuttle (10) may be driven by a servo motor. Upon the width direction movement of the shuttle (10), the entire shuttle (10), including the traveling electrode (1), may move in the width direction. Specifically, the shuttle (10) itself may move in the width direction entirely, where the traveling electrode (1), the first roller (11), the splicing table (12), the first sensor (13), and the second sensor (14) may also move together with the shuttle (10).

The first roller (11) is a roller for transferring the traveling electrode (1), which may be disposed below the splicing table (12) in the height direction from the shuttle (10). The first roller (11) moves forward toward the observer (Z-axis direction) of the diagram before exhaustion of the traveling electrode (1), so that the traveling electrode (1) can be vertically aligned in the height direction between the first roller (11) and the second roller (20) (at this time, the first roller (11) and the second roller (20) are aligned at the same position in the Z-axis direction, and accordingly, the traveling electrode (1) is also aligned at the same position in the Z-axis direction), and then, the width direction position of the traveling electrode (1) can be measured through the sensor (13, 14), and accordingly, the measurement accuracy of the sensor (13, 14) can be improved. Meanwhile, a load cell may be mounted on the first roller (11).

The splicing table (12) is a place where the electrode connection is performed, which may be provided with a plurality of suction holes for suctioning and fixing the traveling electrode (1) upon the electrode connection, a cutter for cutting the traveling electrode (1), and the like.

The first sensor (13) is a sensor measuring a width direction position of the traveling electrode (1), where the width direction position of the electrode (1) may mean a width direction position of an edge (terminal, left edge in the diagram) of the electrode (1). The first sensor (13) may be disposed on one side (left end in the diagram) below the first roller (11) in the height direction from the shuttle (10). The first sensor (13) may be a spool EPC sensor, and the spool EPC sensor may be a sensor for measuring and correcting the meandering of the traveling electrode (1) upon electrode unwinding in the supply part (e.g., shuttle). For example, an optical sensor with Leuze's model GSL 04M/N-30-S8 may be used as the spool EPC sensor (13).

The second sensor (14) is a sensor measuring a width direction position of the traveling electrode (1), which may be disposed on one side (left end in the diagram) above the splicing table (12) in the height direction from the shuttle (10), and may be disposed at the same width direction position as in the first sensor (13). The second sensor (14) may be a traveling electrode edge sensor, and the traveling electrode edge sensor may be a sensor measuring the meandering of the traveling electrode (1). For example, a fiber sensor with OMRON's model ZX-GT28S11 may be used as the traveling electrode edge detection sensor (14).

The second roller (20) is a roller for transferring the traveling electrode (1) passing through the first roller (11), which may be disposed above the shuttle (10) in the height direction. By the width direction movement of the shuttle (10), the width direction position of the traveling electrode (1) on the first roller (11) and the width direction position of the traveling electrode (1) on the second roller (20) may be aligned to be the same. Here, the same means substantially the same, but there may be a slight error (for example, 1 mm or less).

The control part (control unit) may control the width direction position of the traveling electrode (1) on the first roller (11) and the width direction position of the traveling electrode (1) on the second roller (20) to be aligned to be the same by moving the shuttle (10) in the width direction based on the difference in the width direction position of the traveling electrode (1) before and after exhaustion. The control part may be configured in the form of, for example, a Programmable Logic Controller (PLC), and the like. The control part may be provided with the software and hardware for control, and may be disposed at an appropriate location.

Referring to FIG. 3, in an auto-splicing device (facility) that replaces electrodes by connecting a traveling electrode (1) and a standby electrode (2), the width direction position of the traveling electrode (1) may be measured at two different points in the height direction using each sensor (13, 14), before exhaustion of the traveling electrode (1), i.e., before the facility stops. In this way, the sensor values may be confirmed before the facility stop. FIG. 3 illustrates a state before meandering of a traveling electrode (1) occurs, where a first line (L1) represents one side (e.g., left) path line of the traveling electrode (1) before meandering, and a second line (L2) represents the other side (e.g., right) position of the shuttle (10) before correction.

Referring to FIG. 4, the width direction position of the traveling electrode (1) may be measured at two different points in the height direction using each sensor (13, 14), after exhaustion of the traveling electrode (1), i.e., after the facility stops. In this way, the sensor values may be confirmed after the facility stop. FIG. 4 illustrates a state after meandering of a traveling electrode (1) occurs, where there is in a state that the meandering, in which the traveling electrode (1) is twisted to the left in the width direction based on the first line (L1), and the traveling electrode (1) on the lower first roller (11) is twisted to the left in the width direction based on the traveling electrode (1) on the upper second roller (20), has occurred. In an example, the reason for which the meandering in the lower first roller (11) occurs may be because the distance from the bobbin of the electrode roll is closer.

At this time, when the difference between the width direction edge position of the traveling electrode (1) measured by the first sensor (13) and the width direction edge position of the traveling electrode (1) measured by the second sensor (14) exceeds a preset reference value (e.g., 1 mm, etc.), it may be determined as meandering of the traveling electrode (1). The meandering of the traveling electrode (1) may mainly occur upon exhaustion of the traveling electrode (1). In an electrode semi-finished product including a bobbin on which the traveling electrode (1) is wound, a connecting fabric (e.g., PET, etc.) connecting the bobbin and the traveling electrode (1), and the traveling electrode (1), the meandering of the traveling electrode (1) may be due to connection state defects between the connecting fabric and the traveling electrode (1). That is, the electrode semi-finished product defective state may indicate PET-electrode connection state defects. Specifically, upon exhaustion of the traveling electrode (1), the connecting fabric is exposed, where when the connection state between the connecting fabric and the traveling electrode (1) is poor, or when there is meandering in the connecting fabric itself, the meandering of the traveling electrode (1) may occur.

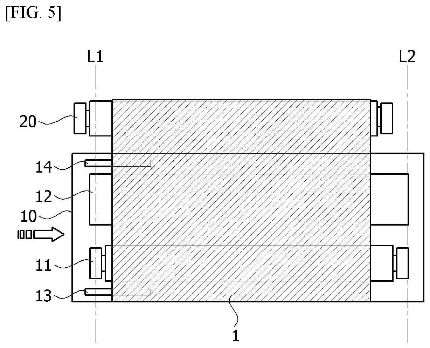

Referring to FIG. 5, it is determined whether correction is to be performed based on the difference (delta) in the width direction position of the traveling electrode (1) before and after exhaustion, and then, when the correction is determined to be performed, the correction may be made by moving the traveling electrode (1) in the width direction, and the width direction movement of the traveling electrode (1) may be performed by the width direction movement of the shuttle (10). As the shuttle (10) itself moves entirely beyond the second line (L2) in the width direction (rightward in the diagram) in the arrow direction, the width direction position of the traveling electrode (1) on the first roller (11) and the width direction position of the traveling electrode (1) on the second roller (20) may be aligned with a new path line adjacent to the first line (L1). At this time, the traveling electrode (1), the first roller (11), the splicing table (12), the first sensor (13), and the second sensor (14) may also move together with the shuttle (10). In this way, the phenomenon of theta twisting (meandering) may be alleviated after correction.

The alignment by width direction correction of the traveling electrode (1) may be performed before the connection of the traveling electrode (1) and the standby electrode (2). That is, the connection of the electrodes may be performed after the width direction correction (alignment) of the traveling electrode (1) is completed. As such, the present disclosure focuses on the correction of the traveling electrode (1) prior to electrode connection (replacement), regardless of the standby electrode (2). If the meandering of the traveling electrode (1) is corrected in advance before electrode replacement, separate correction may not be necessary upon electrode replacement.

The conventional auto-splicing processes proceeded in the order of electrode exhaustion → facility stop → material (electrode) replacement, and that is, after facility stop due to electrode exhaustion, material replacement was performed without separate correction. As such, the conventional techniques lacked the function of measuring the level (meandering) twisted in the vertical direction from the travel direction of the electrode at the time point of the electrode traveling completion, whereby the theta twisting could not be performed.

On the contrary, the auto-splicing process of the present disclosure may proceed in the order of electrode exhaustion → facility stop → tilting (meandering) level correction → material (electrode) replacement. Specifically, in the present disclosure, the pass position may be confirmed during traveling before electrode exhaustion, the pass position may be confirmed after the facility stop, and then the before and after difference (delta) may be compared, tilting correction may be performed by the delta value, and then the material replacement may be performed. In this way, the technology of the present disclosure adds a function to measure the level twisted in the vertical direction from the travel direction of the electrode using the edge sensor and the spool EPC sensor installed in the supply part (e.g., shuttle) before the traveling completion and at a time point of the traveling completion to confirm the variation (delta), and adds a function to correct theta twisting by only the confirmed variation, whereby it is possible to overcome semi-finished product state defects.

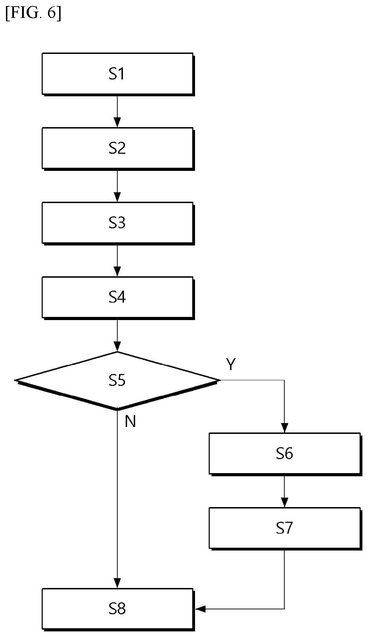

Referring to FIG. 6, the electrode alignment method according to the present disclosure may include a correction start step (S1), a first roller forward step (S2), a sensor Present Value (PV) confirmation step before electrode exhaustion (S3), a sensor PV confirmation step after electrode exhaustion (S4), a PV variation deviation determination step between two sensors (S5), a distance calculation step from a shuttle Y-axis movement direction according to the PV variation direction and variation (S6), a traveling electrode shuttle Y-axis movement correction step (S7), and an electrode stopper lowering step (S8).

At S1, the correction begins, where the correction may proceed to automatic correction. The correction start point may be a case where a winding diameter (e.g., diameter of the electrode roll wound in a roll shape) of the traveling electrode (1) is below a predetermined reference value.

At S2, the first roller (11) is advanced. By advancing the first roller (11), the traveling electrode (1) may be vertically aligned in the height direction, thereby improving the measurement accuracy of the sensors (13, 14).

At S3, the PVs for the width direction positions of the spool EPC sensor (13) and the traveling electrode edge sensor (14) are confirmed before electrode exhaustion (meandering occurrence). At S4, the PVs for the width direction positions of the two sensors (13, 14) are confirmed after electrode exhaustion (meandering occurrence). Specifically, after sampling PV data in a sampling section, the average value of the sampling data may be calculated, and the sensor PV delta value may be calculated from this average value. At this time, the variation of the spool EPC sensor (13), which is closer to the bobbin, may be greater than the variation of the traveling electrode edge sensor (14).

At S5, it is determined how much PV variation deviation the two sensors (13, 14) have. Based on the PV variation deviation (the difference between the spool sensor delta absolute value and the edge sensor delta absolute value) exceeding a reference value (target value) (Y in FIG. 6), the correction is performed, and based on the PV variation deviation not exceeding the reference value (N in FIG. 6), i.e., when it is below or equal to the reference value, no correction is necessary, so that the correction may not be performed. The reference value may be appropriately set in advance, and may be changed as needed.

At S6, the shuttle Y-axis movement (correction) direction and movement (correction) distance are calculated and determined according to the PV variation direction (left or right in the width direction) and the PV variation. For example, if the edge sensor PV increases, the shuttle may be moved in the Y-axis tab direction, and if the edge sensor PV decreases, the shuttle may be moved in the Y-axis bottom direction.

At S7, according to the calculation results, the correction is performed by moving the traveling electrode shuttle (10) in the Y-axis direction (width direction), where the correction may be performed until the variations of the two sensors (13, 14) become equal relative to the PVs before the meandering occurrence. Thereafter, when the spool sensor delta absolute value and the edge sensor delta absolute value exceed the target values, the shuttle (10) movement may be resumed, and if the values are below the target values, the correction may be terminated.

At S8, if it is determined that no correction is to be performed or if the correction is completed, a electrode stopper disposed above the shuttle (10) is lowered, and the electrode replacement (connection) is performed. The lowering of the electrode stopper is for an electrode cutting process of the electrode replacement process.

Table 1 shows verification results applying the theta correction logic according to the present disclosure, where in the table, the unit is mm, and + indicates left meandering in the width direction, and - indicates right meandering in the width direction. Specifically, upon stop due to material replacement, the PV variation deviation (meandering level) of the spool EPC sensor and the traveling electrode edge sensor occurred by about 5 mm or so compared to the normal traveling, the correction was performed until the PV variation deviation was less than 1 mm, and consequently, the traveling electrode shuttle was moved by +7.0 mm in the Y-axis.

**[Table 1]**

| | Traveling electrode edge sensor | Spool EPC sensor |
|---|---|---|
| PV (reference) before meandering | 13.8680 | 11.7096 |
| PV after meandering | 11.4200 | 14.1100 |
| PV variation after meandering | -2.4480 | +2.4004 |
| PV variation deviation after meandering | 4.8484 | |
| PV after correction | 16.5100 | 14.7600 |
| PV variation after correction | +2.6420 | +3.0504 |
| PV variation deviation after correction | 0.4084 | |

As such, by applying the theta correction logic according to the present disclosure, the meandering of the material core portion was improved. For example, the defect incidence upon material replacement was reduced from 43 cells (when correction was not used) to 22 cells (when correction was used), and the defective section before and after the material replacement joint was also reduced upon meandering correction.

Also, when comparing connection portion theta twisting before and after application of the present disclosure, the theta twisting phenomenon of ±0.5 degrees or more was reduced, and converged to a 0 value (the closer the theta twisting level is to 0, the better the alignment and less twisting). Then, the electrode joint theta twisting deviation was also reduced from 0.35 to 0.21, that is, the joint theta value deviation was also reduced by 40%.

Furthermore, when comparing vision data trends before and after theta correction application, joint section meandering and dispersion due to traveling electrode meandering were improved, and the material replacement defect occurrence section was reduced. Then, when comparing the defect rates before and after the correction for two positive electrodes upon positive electrode material replacement, the numbers of defects were reduced from 47 to 34 and from 38 to 27, respectively.

### [Explanation of Reference Numerals]

1: traveling electrode, 2: standby electrode, 3: connecting tape, 10: shuttle, 11: first roller, 12: splicing table, 13: first sensor, 14: second sensor, 20: second roller

## Claims

1. An electrode alignment method, comprising;
in an auto-splicing device that connects a traveling electrode and a standby electrode, measuring a width direction position of the traveling electrode before an exhaustion of the traveling electrode;
measuring a width direction position of the traveling electrode after the exhaustion of the traveling electrode; and
performing a correction by moving the traveling electrode in a width direction based on a difference in the width direction position of the traveling electrode before exhaustion and the width direction position of the traveling electrode after the exhaustion.

2. The electrode alignment method according to claim 1, wherein
the performing a correction by moving the traveling electrode in the width direction is performed by a width direction movement of a shuttle including a splicing table on which an electrode connection is performed, a first roller for transferring the traveling electrode, and a sensor for measuring the width direction position of the traveling electrode.

3. The electrode alignment method according to claim 2, wherein
a width direction position of the traveling electrode in the first roller is aligned by the width direction movement of the shuttle to be identical to a width direction position of the traveling electrode in a second roller, which is disposed above the shuttle in a height direction.

4. The electrode alignment method according to claim 2, wherein
the width direction movement of the shuttle is driven by a servomotor.

5. The electrode alignment method according to claim 2, wherein
the shuttle, including the splicing table, the first roller, and the sensor, and the traveling electrode is moved in the width direction.

6. The electrode alignment method according to claim 2, wherein
the sensor comprises a first sensor positioned downward and a second sensor positioned upward in a height direction with respect to the splicing table.

7. The electrode alignment method according to claim 6, wherein
the first sensor is a spool edge position controller sensor, and the second sensor is a traveling electrode edge sensor.

8. The electrode alignment method according to claim 6, further comprising:
based on a difference between a width direction position of the traveling electrode measured by the first sensor and a width direction position of the traveling electrode measured by the second sensor exceeding a preset reference value, determining a meandering of the traveling electrode to perform the correction.

9. The electrode alignment method according to claim 8, wherein
the meandering of the traveling electrode occurs when the traveling electrode is exhausted.

10. The electrode alignment method according to claim 9, wherein
in an electrode semi-finished product comprising a bobbin on which the traveling electrode is wound, a connecting fabric connecting the bobbin and the traveling electrode, and the traveling electrode, the meandering of the traveling electrode is due to connection state defects between the connecting fabric and the traveling electrode.

11. The electrode alignment method according to claim 3, wherein
before measuring the width direction position of the traveling electrode before the exhaustion of the traveling electrode, the first roller advances to align the traveling electrode between the first roller and the second roller to be vertical in the height direction.

12. The electrode alignment method according to claim 1, wherein
the correction of the traveling electrode is performed before a connection of the traveling electrode and the standby electrode.

13. An electrode alignment system, comprising:
a shuttle including a splicing table on which an electrode connection is performed, a first roller for transferring a traveling electrode supplied from a bobbin, and a sensor for measuring a width direction position of the traveling electrode;
a second roller disposed above the shuttle in a height direction and adapted to transfer the traveling electrode passing through the first roller; and
a control part configured to control a width direction position of the traveling electrode in the first roller and a width direction position of the traveling electrode in the second roller to be aligned equally by moving the shuttle in a width direction based on a difference in a width direction position of the traveling electrode before an exhaustion and a width direction position of the traveling electrode after the exhaustion.
